# FASCICULE DE BREVET EUROPEEN

(11) **EP 1 336 763 B1**
(45) Date de publication et mention de la délivrance du brevet: **27.12.2006**
(21) Numéro de dépôt: 03290349.4
(22) Date de dépôt: 13.02.2003
(51) Int. Cl.: F16B 37/04, F16B 5/06

(54) **Dispositif de fixation à pince**
Befestigungsmittel mit Klammer
Joining device with clamp

(30) Priorité: 13.02.2002 FR 0201793
(43) Date de publication de la demande: 20.08.2003
(73) Titulaire: TEXTRON FASTENING SYSTEMS SITE DE BONNEUIL SUR MARNE, 94380 Bonneuil sur Marne (FR)
(72) Inventeur: Bros, Denis, 94510 La Queue en Brie (FR); Lemesre, Frédérique, 77200 Torcy (FR); Welu, Jacques, 94210 La Varenne Saint Hilaire (FR)
(74) Mandataire: Le Forestier, Eric

(56) Documents cités:
- DE-A- 4 414 223
- FR-A- 2 670 254
- FR-A- 2 749 356
- GB-A- 1 106 905
- US-A- 4 955 772

## Description

La présente invention concerne le domaine des dispositifs de fixation.

Plus précisément encore la présente invention concerne le domaine des écrous à pince conçus pour lier et fixer entre elles deux pièces.

On connaît de nombreux modes de réalisation de tels écrous à pince.

A cet égard on pourra par exemple se référer aux documents FR-A-1 488 114, FR-A-2 489 903, FR-A-2 669 384, FR-A-2 670 254, FR-A-2 679 302, FR-A-2 698 134, FR-A-2 749 356, FR-A-2 719 345, FR-A-2 713 726, FR-A-2 715 697, FR-A-2 697 060, FR-A-2 649 454, FR-A-2 627 554, FR-A-2 626 329, US-A-2 771 113, US-A-4 729 706, US-A-4 826 375, GB-A-1 106 905, GB-A-802 435, GB-A-2 099 099, EP-A-0 353 468, EP-A-0 220 526, DE-A-88 13 031, DE-A-1 625 275, US-A-4 955 772.

Comme leur nom l'indique, les écrous à pince comprennent une pince et un écrou de fixation.

L'écrou de fixation a pour fonction de recevoir et maintenir un organe complémentaire de blocage, tel qu'une vis, un boulon, un goujon ou un moyen équivalent. Il a dans la plupart des cas la forme générale d'un cylindre pourvu d'un canal interne ou d'une empreinte réalisée dans une branche de la pince.

La pince a pour fonction de prépositionner et prémaintenir le dispositif sur l'une de pièces avant mise en place de l'organe de blocage. Elle comprend généralement deux plaques destinées à être placées respectivement de part et d'autre de la pièce en question, et reliées entre elles par une bande de liaison. L'une des deux plaques porte l'écrou.

Le document US-A-4955772 en particulier divulgue un écrou à pince réalisé en matériau thermoplastique, comprenant une plaque principale qui porte un fût destiné à recevoir une vis, et une contreplaque, placée en regard de la plaque principale, laquelle contreplaque est plane et possède une surépaisseur ou épaulement en saillie vers ledit fût pour servir d'élément de centrage dans l'orifice d'une pièce à fixer.

Pour fixer deux pièces entre elles à l'aide d'un écrou à pince, on procède généralement comme suit.

L'écrou à pince est mis en place sur une première pièce. La deuxième pièce est placée en regard de celle-ci. Puis l'organe de blocage, par exemple une vis, est engagée dans les deux pièces et immobilisé dans l'écrou.

Les écrous à pince connus ont déjà rendu de grands services. Cependant ils ne donnent pas toujours totalement satisfaction.

En particulier la plupart des écrous à pince connus ne peuvent être utilisés qu'avec des pièces dont les épaisseurs sont comprises dans une gamme étroite, et/ou ne permettent pas toujours de garantir un parallélisme étroit entre les deux pièces.

La présente invention a pour but de proposer un nouvel écrou à pince présentant des performances supérieures à celles des écrous à pince antérieurs connus, et en particulier qui permette d'éviter tout problème de fluage de son propre matériau constitutif.

Ce but est atteint dans le cadre de la présente invention grâce à un dispositif du type défini en revendication 1 annexée.

D'autres caractéristiques, buts et avantages de la présente invention apparaîtront à la lecture de la description détaillée qui va suivre et en regard des dessins annexés, donnés à titre d'exemple non limitatif et sur lesquels :

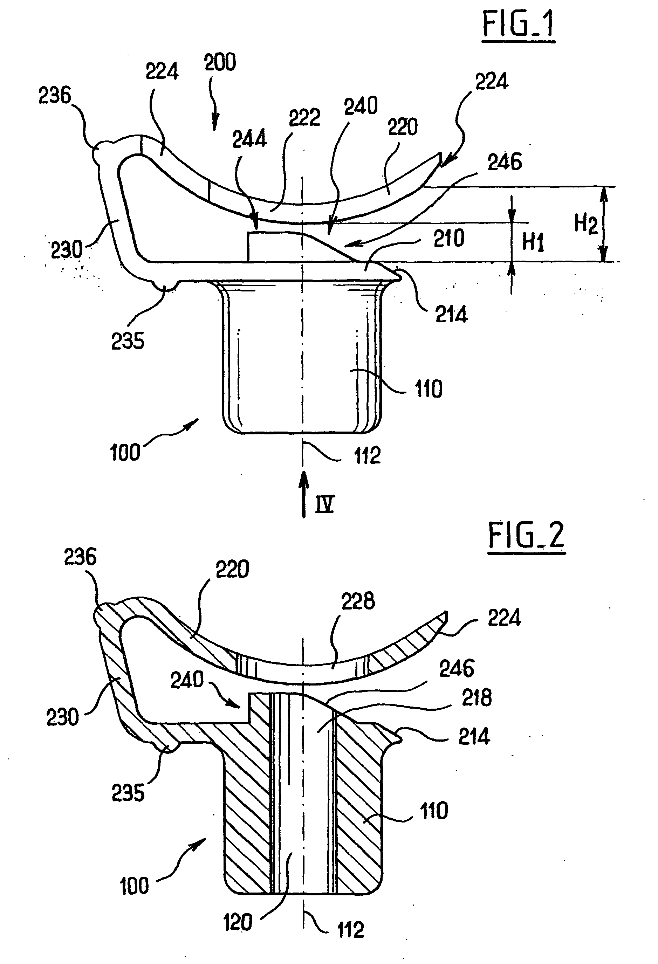

- la figure 1 représente une première vue latérale d'un dispositif conforme à un mode de réalisation préférentiel de la présente invention,

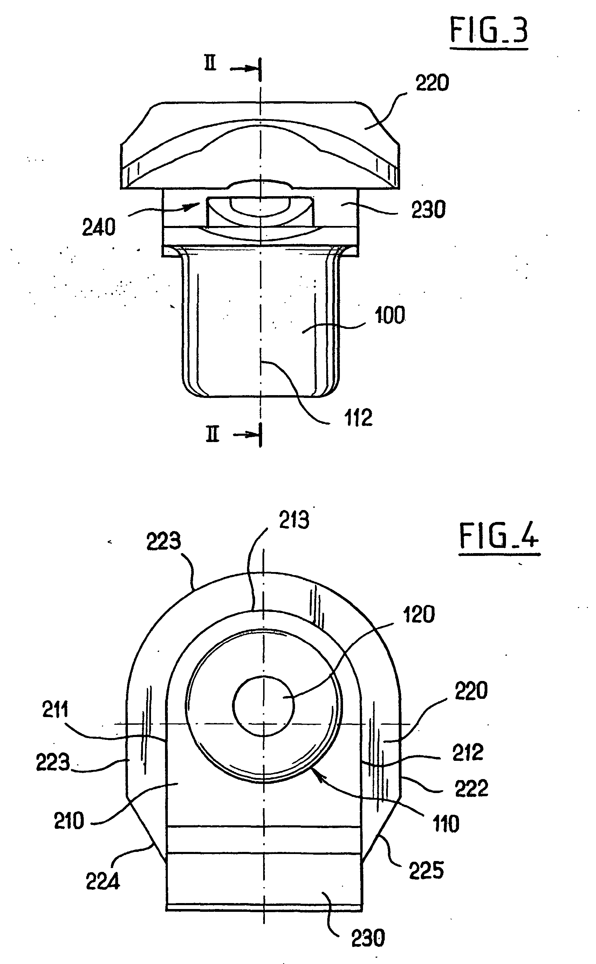

- la figure 2 représente une vue en coupe du même dispositif selon le plan de coupe référence II-II sur la figure 3,
- la figure 3 représente une seconde vue latérale, orthogonale à la figure 1, du même dispositif,
- la figure 4 représente une vue en bout, selon l'orientation référencée IV sur la figure 1, du même dispositif,

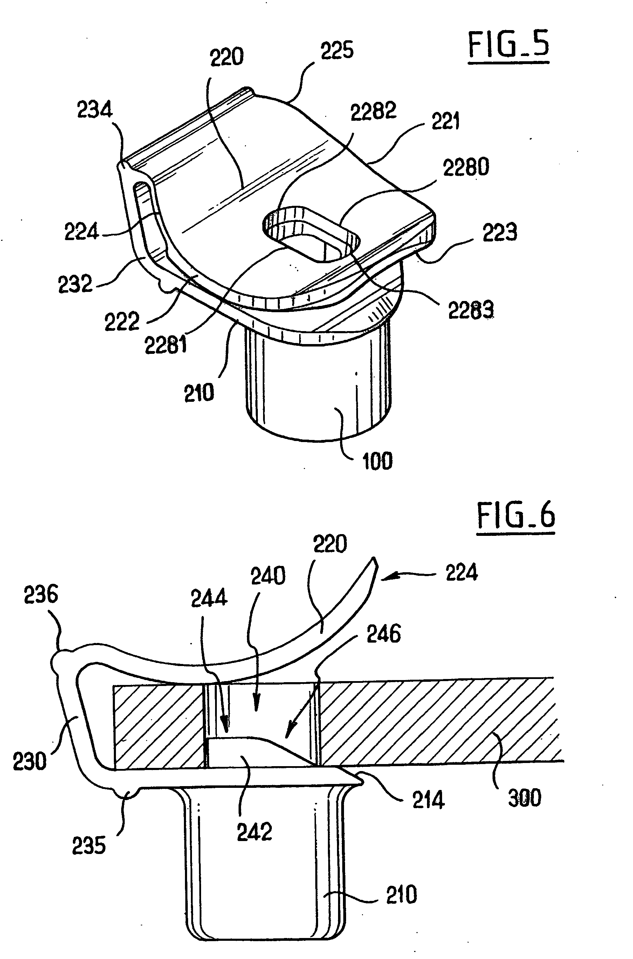

- la figure 5 représente une vue en perspective de ce dispositif,
- les figures 6 à 8 représentent schématiquement trois étapes successives de fixations de deux pièces entre elles à l'aide d'un dispositif de fixation conforme à la présente invention,
- la figure 9 représente une vue en bout d'un dispositif conforme à la présente invention positionnée sur une pièce à fixer, et
- la figure 10 représente une vue similaire après pivotement du dispositif par rapport à la tranche de la pièce, à des fins de gain d'encombrement.

L'écrou à pince conforme à la présente invention, illustré sur les figures annexées comprend essentiellement un élément de fixation 100 et une pince 200.

Il est formé de préférence d'une pièce unique par moulage en matière plastique, par exemple, mais non limitativement en polyoxyméthylène, voire en polyamide 6.6.

Le matériau constitutif du dispositif et le diamètre de l'écrou sont de préférence adaptés pour autoriser plusieurs (typiquement de l'ordre de 10 à 15 fois) montages et démontages de l'organe de blocage.

Le matériau constitutif du dispositif doit par ailleurs être adapté pour autoriser des déformations locales élastiques, au niveau de zones d'articulation, comme on le décrira par la suite.

L'élément de fixation 100 peut faire l'objet de nombreux modes de réalisation.

Selon le mode de réalisation préférentiel illustré sur les figures annexées, il est formé d'un fût 110 centré sur un axe 112.

La pince 200 peut également faire l'objet de nombreux modes de réalisation.

Elle comprend essentiellement une plaque principale 210, une contreplaque 220 et une bande de liaison 230 qui relie les deux plaques 210 et 220.

Le fût 110 est solidaire de la surface externe de la plaque principale 210, l'axe 112 étant orthogonal au plan moyen de celle-ci.

Plus précisément de préférence le fût 110 affleure sensiblement le bord libre de la plaque principale 210 définissant l'ouverture de la pince, c'est à dire le bord de la plaque principale 210 le plus éloigné de la bande de liaison 230.

La surface externe du fût 110 peut être quelconque. Comme illustré sur les figures, elle est de préférence cylindrique de révolution.

Le fût 110 possède un canal interne 120. Celui-ci débouche au moins sur l'extrémité du fût 110 solidaire de la plaque 210. Le fût 110 peut être borgne, c'est à dire ne pas déboucher sur l'extrémité du fût 110 opposée à la plaque principale 210. Cependant selon le mode de réalisation préférentiel illustré sur les figures annexées, le canal 120 est traversant, c'est à dire qu'il débouche sur les deux extrémités du fût 110.

La canal 120 est destiné à recevoir un organe de blocage du type vis, par exemple une vis à métaux ou tôle ou une vis à matériau tendre, goujon, boulon, organe de blocage ¼ de tour, ou tout moyen équivalent à savoir d'une manière générale, tout organe de blocage comprenant une tête évasée et une tige propre à être engagée et maintenue dans un fût complémentaire adapté.

A ce titre le canal 120 peut posséder une surface lisse, circulaire de révolution, voire de section droite polygonale, si l'organe de blocage est autotaraudant ou autoblocant. Il peut également être taraudé ou posséder un réseau de nervures ou cannelures propres à assurer l'immobilisation de l'organe de blocage.

Pour faciliter la réalisation, plus précisément le démoulage du dispositif, de préférence, le canal 120 est en dépouille, c'est à dire légèrement évasé en direction de l'extrémité du fût 110.

A titres d'exemple non limitatif, le diamètre externe du fût 110 peut être de l'ordre de 8mm, le diamètre interne moyen du canal 120 de l'ordre de 3 mm et la hauteur du fût 110 considérée parallèlement à l'axe 112 est typiquement de l'ordre de 9 mm.

La plaque principale 210 est de préférence plane.

Elle est délimitée par deux tranches latérales rectilignes 211, 212, parallèles entre elles et orthogonales à la bande de liaison 230, un bord libre d'ouverture 213 formé de préférence d'une facette hémicylindrique convexe centrée sur l'axe 112, et un bord rectiligne de raccordement sur la bande de liaison 230.

A titre d'exemple non limitatif, le rayon de la facette 213 et donc la distance séparant les deux tranches latérales 211 et 212 est de l'ordre de 10 mm et la longueur des tranches 211 et 212 est de l'ordre de 8 mm. L'épaisseur de la plaque 210 (et celle de la contreplaque 220 et de la bande de liaison 230) est typiquement de l'ordre de 1 mm.

Bien évidemment la plaque principale 210 possède un orifice 218 aligné sur le canal 120.

La contreplaque 220 a une forme non rectiligne convexe vers le fût 110.

Plus précisément encore comme illustré sur les figures annexées, de préférence la contreplaque 220 a une forme incurvée convexe vers le fût 110. Ainsi avantageusement, la contreplaque 220 est formée d'une calotte circulaire centrée autour d'un axe orthogonal à l'axe 112 et parallèle à la bande de liaison 230.

Au repos le rayon de courbure de la contreplaque 220 est typiquement de l'ordre de 20 mm.

La contreplaque 220 possède une lumière traversante 228 destinée à recevoir l'organe de blocage. La lumière 228 est ainsi placée en regard du canal 120 et centrée sur celui-ci. Ses forme et dimensions sont adaptées pour éviter une interaction avec l'organe de blocage, tel qu'une vis, engagé sur le dispositif lors de l'assemblage, quelle que soit l'épaisseur de la pièce placée et serrée dans la pince 200 et donc quelle que soit la déformation de la contreplaque 220.

La lumière 228 est allongée dans un sens parallèle aux tranches 211, 212, soit perpendiculairement à la bande de liaison 230.

Typiquement la lumière 228 est ainsi délimitée par deux tronçons 2280, 2281 rectilignes, parallèles entre eux et orthogonaux à la bande de liaison 230 et deux calottes d'extrémité 2282 et 2283 hémicylindriques concaves.

La distance séparant les deux tronçons 2280 et 2281 et donc le rayon de courbure des calottes 2282 et 2283 est au moins égal au diamètre du canal 120. Il est ainsi typiquement de l'ordre de 3 mm. La plus grande longueur de la lumière 228 est typiquement de l'ordre de 6,5 mm.

La contreplaque 220 est délimitée par deux tranches latérales rectilignes 221, 222, parallèles entre elles et orthogonales à la bande de liaison 230, un bord libre d'ouverture 223 formé de préférence d'une facette hémicylindrique convexe centrée sur l'axe 112, et deux tronçons auxiliaires 224, 225qui assurent le raccordement des tranches 221 et 222 avec un bord rectiligne de raccordement sur la bande de liaison 230.

Les deux tronçons auxiliaires 224 et 225 convergent en direction de la bande de liaison 230. Ainsi la contreplaque 220 a une largeur moyenne (considérée parallèlement à la bande de liaison 230) supérieure à la plaque 210.

Cette disposition sert de détrompage dans le positionnement du dispositif. Il suffit par exemple de prévoir dans l'une des pièces à assembler, une gorge dont la largeur est comprise entre la largeur de la plaque 210 et celle de la contreplaque 220 pour imposer un sens de montage unique au dispositif.

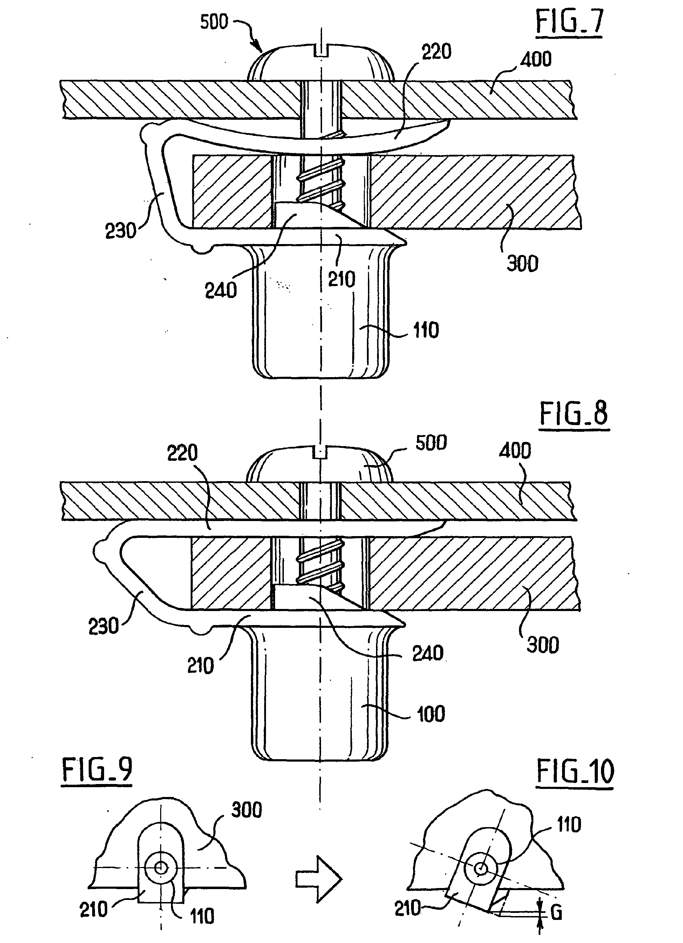

Par ailleurs la présence des deux tronçons 224, 225convergeant permet de limiter l'encombrement total du dispositif lorsque, comme on le voit à l'examen comparé des figures 9 et 10 le dispositif est pivoté, par rapport à la tranche de la pièce à fixer, la bande de liaison 230 n'étant plus parallèle à cette tranche. Sur la figure 10 le gain en encombrement (par rapport à une variante selon laquelle la contreplaque 220 aurait une largeur constante) est référencé G.

A titre d'exemple non limitatif, le rayon de la facette 223 et donc la distance séparant les deux tranches latérales 221 et 222 est de l'ordre de 14 mm, la longueur des tranches 221 et 222 est de l'ordre de 8 mm et celle des tronçons 224 et 225 est avantageusement de l'ordre de 8 mm.

La bande de liaison 230 est de préférence une bande continue globalement plane. Avantageusement la bande 230 est inclinée au repos, par rapport à l'axe 112. Elle diverge par rapport à celui-ci en rapprochement de la contreplaque 220. Typiquement l'inclinaison au repos entre la bande de liaison 230 et l'axe 112 est de l'ordre de 10°. Ainsi la bande de liaison 230 forme avantageusement, au repos, un angle aigu par rapport à la contreplaque 220 et un angle obtus par rapport à la plaque principale 210.

La hauteur de la bande de liaison 230, considérée entre ses deux zones de liaison sur la plaque 210 et sur la contreplaque 230 est typiquement de l'ordre de 6 mm.

Les zones de liaison 232 et 234 entre la bande de liaison 230 et respectivement la plaque 210 et la contreplaque 220, sont avantageusement formées de calottes cylindriques concaves vers le centre de la pince 200 et centrées sur des axes respectifs orthogonaux à l'axe 112 et parallèles à la bande de liaison 230.

Selon le mode de réalisation particulier et non limitatif illustré sur les figures annexées, le dispositif est muni, au niveau de la bande de liaison 230, plus précisément sur la surface extérieure de celle-ci, et à proximité de chacune des deux zones de liaison 232 et 234, de deux bourrelets hémicylindriques 235, 236, destinés à servir d'appui à des éjecteurs pour faciliter la sortie de moule.

La plaque principale 210 est avantageusement munie sur sa surface interne d'un moyen 240 en saillie apte à retenir la pièce insérée dans la pince et à centrer le dispositif par rapport au trou de passage ménagé dans la pièce à fixer.

Selon le mode de réalisation préférentiel illustré sur les figures annexées, ce moyen de retenue 240 est formée d'un téton centré sur l'axe 112.

Celui-ci est destiné à prendre position dans un perçage ou équivalent formé dans la pièce à assembler sur laquelle est positionnée la pince 200.

Plus précisément le téton 240 est délimitée par une surface périphérique 242 cylindrique de révolution centrée sur l'axe 112, et une facette d'extrémité plane 244 orthogonale à l'axe 112 tronquée par un plan 246 dirigé vers l'ouverture de la pince et qui converge vers la plaque principale 210, en rapprochement du contour d'ouverture de la pince 200.

Bien entendu le diamètre externe du téton 240 doit être au moins égal au diamètre du perçage formé dans pièce à assembler.

Le plan 246 constitue ainsi une rampe qui facilite l'engagement du dispositif sur la pièce à assembler et limite l'effort de montage.

La partie du téton 240 dirigée vers la bande de liaison 230 sert d'appui, après la mise en place, au bord du perçage formé dans la pièce à assembler, pour interdire un libre retrait du dispositif. elle constitue ainsi un système anti-perte.

On notera que de préférence les deux facettes d'ouverture 213 et 223 des plaques 210 et 220 sont tronquées. Elles définissent ainsi deux chanfreins 214, 224 qui divergent vers l'extérieur de la pince, pour faciliter la encore l'engagement du dispositif sur la pièce à assembler et limiter l'effort de montage.

Selon une autre caractéristique avantageuse de la présente invention, la hauteur libre H1 disponible au repos entre les deux plaques 210 et 220 (c'est à dire la plus petite distance entre les deux plaques 210 et 220) est avantageusement ≥ 1,5 mm.

Par ailleurs la hauteur H2 du contour d'ouverture de la pince, prise entre les deux bords libres des plaques 213, 223, est typiquement de l'ordre de grandeur de la hauteur de la bande de liaison 230 et avantageusement ≥ à au moins 2H1, très préférentiellement ≥ à 3H1.

Pour utiliser le dispositif conforme à la présente invention, on procède essentiellement comme suit.

Dans un premier temps, comme illustré sur la figure 6, l'écrou à pince est mis en place sur une première pièce 300. Pour cela la pince 200 est engagée sur la tranche de la pièce 300. On notera que la bande de liaison sert de butée au cours de cette opération, limitant le déplacement de l'écrou à pince sur la pièce 300. Dans ce contexte, et non limitativement, la cote entre l'axe 112 du fût 110 et la face interne de la bande de liaison 230 est avantageusement de l'ordre de 7,5mm. Le téton 240 est alors positionné dans le perçage de la pièce 300 et retient celle-ci.

Dans un deuxième temps, la deuxième pièce 400 est placée en regard de la contreplaque 220, parallèlement à la première pièce 300, son propre perçage étant aligné sur l'axe 112. L'organe de blocage, par exemple une vis 500, est alors engagé à travers les perçages des deux pièces 300 et 400 et dans l'écrou à pince, pour venir en prise avec le fût 110 comme illustré sur la figure 7.

L'organe de blocage 500 peut être serré sous un effort quelconque approprié. Comme illustré sur la figure 8, lorsqu'un effort suffisant est appliqué sur l'écrou à pince, la bande de liaison 230 s'incline progressivement de plus en plus par rapport à l'axe 112 et la contreplaque 220 s'aplanit. Dans le cadre de la présente invention, la pince se déforme ainsi à la façon d'un parallélogramme déformable, c'est à dire que les plans moyens des deux plaques 210 et 220 peuvent rester parfaitement parallèles entre eux, les deux plaques 210 et 220 pivotant par rapport à la bande de liaison 230 au niveau respectivement des deux zones de liaison 232 et 234.

En définitive, le dispositif conforme à la présente invention autorise ainsi sous serrage, une parfaite planéité de la contreplaque 220, un parfait parallélisme des deux pièces 300 et 400 et un maintien ferme de celles-ci, sans déformation de la plaque principale 210 et donc en maintenant le fût 110 parfaitement orthogonal à la plaque 210. Le dispositif conforme à la présente invention permet ainsi d'éviter tout décalage, inclinaison ou déport de l'organe de blocage 500.

A l'état plan de la contreplaque 220, l'encombrement en épaisseur du dispositif est égal à la somme de l'épaisseur de la pièce 300 assemblée et des épaisseurs cumulées des deux plaques 210 et 220. Cet encombrement peut donc être nettement inférieur à la hauteur de la bande de liaison 230, alors que d'une manière générale, les dispositifs antérieurs connus imposent un encombrement égal au minimum à la hauteur de la bande de liaison de leur pince.

Les valeurs dimensionnelles du dispositif indiquées précédemment ne sont aucunement limitative. Elles permettent typiquement de monter le dispositif sur une pièce 300 dont l'épaisseur peut varier entre 2,3 et 5,5 mm.

La présente invention permet de remplacer ainsi par un dispositif identique et donc une référence unique, une pluralité de dispositifs antérieurs requis lorsque des pièces d'épaisseurs différentes sont impliquées.

Bien entendu la présente invention n'est pas limitée au mode de réalisation particulier qui vient d'être décrit, mais s'étend à toutes variantes conformes à son esprit.

Par exemple le cas échéant la bande de liaison 230 peut être au moins partiellement évidée.

Par ailleurs on a décrit précédemment une bande de liaison 230 généralement plane et qui ne se déforme pas notablement sous l'effet d'un serrage appliqué, ses zones de liaison 232, 234 étant en revanche adaptées pour subir une déformation et permettre au dispositif de travailler à la manière d'un parallélogramme déformable de sorte que les plaques 210, 220 restent parallèles entre elles. En variante, dans le cadre de la présente invention, on peut utiliser une bande de liaison déformable pour permettre de maintenir ce parallélisme entre les plaques 210 et 220. A ce titre, la bande de liaison 230 peut par exemple être courbée ou constituée de deux éléments symétriques par rapport à un plan parallèle à la plaque principale 210, et former un angle obtus (voire aiguë) par rapport à ce plan. Une telle disposition permet de favoriser la diminution de l'encombrement vertical (mesuré suivant l'axe du fût) sous l'effet d'un effort exercé sur la contreplaque 220 suivant l'axe du fût.

Le dispositif peut être réalisé en une couleur bien distinctive (par exemple blanche) et formant contraste par rapport aux pièces à fixer, pour servir de témoin de présence.

## Revendications

1. Dispositif de fixation comprenant une pince (200) et un élément de fixation (100), la pince (200) étant formée d'une plaque principale (210) et d'une contreplaque (220) reliées entre elles par une bande de liaison (230), et l'élément de fixation (100) comprenant un fût (110) solidaire de la plaque principale (210) et pourvu d'un canal interne (120), **caractérisé par le fait que** la contreplaque (220) a, au repos, une forme non rectiligne incurvée convexe vers le fût (110), tout en étant adaptée pour accepter une déformation à l'état plan sous contrainte mécanique.

2. Dispositif selon la revendication 1 , **caractérisé par le fait qu'**il est formé d'une pièce unique par moulage en matière plastique.

3. Dispositif selon l'une des revendications 1 ou 2, **caractérisé par le fait qu'**il est formé en polyoxyméthylène.

4. Dispositif selon l'une des revendications 1 à 3, **caractérisé par le fait qu'**il est réalisé en un matériau autorisant des déformations locales élastiques.

5. Dispositif selon l'une des revendications 1 à 4, **caractérisé par le fait que** le canal interne (120) du fût (110) débouche au moins sur l'intérieur de la pince (200).

6. Dispositif selon l'une des revendications 1 à 5, **caractérisé par le fait que** le canal interne (120) du fût (110) est adapté pour recevoir un organe de blocage (500) du type vis, par exemple une vis à métaux ou tôle ou une vis à matériau tendre, goujon, boulon, organe de blocage ¼ de tour, ou tout moyen équivalent à savoir d'une manière générale, tout organe de blocage comprenant une tête évasée et une tige propre à être engagée et maintenue dans le fût.

7. Dispositif selon l'une des revendications 1 à 6, **caractérisé par le fait que** le canal interne (120) du fût posséde une surface lisse.

8. Dispositif selon l'une des revendications 1 à 6, **caractérisé par le fait que** le canal interne (120) du fût est taraudé.

9. Dispositif selon l'une des revendications 1 à 8, **caractérisé par le fait que** le canal interne (120) du fût (110) est en dépouille, légèrement évasé en direction de l'extrémité du fût (110).

10. Dispositif selon l'une des revendications 1 à 9, **caractérisé par le fait que** la plaque principale (210) possède un orifice (218) aligné sur le canal (120) du fût.

11. Dispositif selon l'une des revendications 1 à 10, **caractérisé par le fait que** la contreplaque (220) est formée d'une calotte circulaire centrée autour d'un axe orthogonal à l'axe (112) du fût et parallèle à la bande de liaison (230).

12. Dispositif selon l'une des revendications 1 à 11, **caractérisé par le fait que** la contreplaque (220) possède une lumière traversante (228) destinée à recevoir l'organe de blocage.

13. Dispositif selon la revendication 12, **caractérisé par le fait que** la lumière (228) a des forme et dimensions adaptées pour éviter une interaction avec l'organe de blocage, quelle que soit l'épaisseur de la pièce placée et serrée dans la pince (200) et donc quelle que soit la déformation de la contreplaque (220).

14. Dispositif selon l'une des revendications 12 ou 13, **caractérisé par le fait que** la lumière (228) est allongée dans un sens perpendiculaire à la bande de liaison (230).

15. Dispositif selon l'une des revendications 1 à 14, **caractérisé par le fait que** les deux plaques (210, 220) ont des largeurs différentes.

16. Dispositif selon l'une des revendications 1 à 15, **caractérisé par le fait que** la contreplaque (220) a une largeur supérieure à la plaque principale (210).

17. Dispositif selon l'une des revendications 1 à 16, **caractérisé par le fait que** la contreplaque (220) est reliée à la bande de liaison (230) par deux tronçons (224, 225) qui convergent en direction de la bande de liaison (230).

18. Dispositif selon l'une des revendications 1 à 17, **caractérisé par le fait que** la bande de liaison (230) est inclinée au repos, par rapport à l'axe (112) du fût (110).

19. Dispositif selon l'une des revendications 1 à 18, **caractérisé par le fait que** la bande de liaison (230) diverge par rapport à l'axe (112) du fût (110) en rapprochement de la contreplaque (220).

20. Dispositif selon l'une des revendications 1 à 19, **caractérisé par le fait que** la plaque principale (210) est munie sur sa surface interne d'un moyen (240) en saillie apte à retenir la pièce insérée dans la pince et à centrer le dispositif par rapport au trou de passage ménagé dans la pièce à fixer.

21. Dispositif selon la revendication 20, **caractérisé par le fait que** le moyen de retenue (240) est formé d'un téton centré sur l'axe (112) du fût.

22. Dispositif selon la revendication 21, **caractérisé par le fait que** le téton (240) est délimité par une facette d'extrémité (244) tronquée par un plan (246) dirigé vers l'ouverture de la pince et qui converge vers la plaque principale (210), en rapprochement du contour d'ouverture de la pince (200).

23. Dispositif selon l'une des revendications 21 ou 22, **caractérisé par le fait que** la partie du téton (240) dirigée vers la bande de liaison (230) sert d'appui, après la mise en place, au bord du perçage formé dans la pièce à assembler, pour interdire un libre retrait du dispositif.

24. Dispositif selon l'une des revendications 1 à 23, **caractérisé par le fait que** les facettes d'ouverture (213, 223) des plaques (210, 220) sont tronquées et définissent des chanfreins (214, 224) qui divergent vers l'extérieur de la pince.

25. Dispositif selon l'une des revendications 1 à 24, **caractérisé par le fait que** la hauteur libre (H1) disponible au repos entre les deux plaques (210, 220) est ≥ 1,5 mm.

26. Dispositif selon l'une des revendications 1 à 25, **caractérisé par le fait que** la hauteur (H2) du contour d'ouverture de la pince, prise entre les deux bords libres (213, 223) des plaques (210, 220) est de l'ordre de grandeur de la hauteur de la bande de liaison (230).

27. Dispositif selon l'une des revendications 1 à 26, **caractérisé par le fait que** la hauteur (H2) du contour d'ouverture de la pince, prise entre les deux bords libres (213, 223) des plaques (210, 220) est ≥ à au moins 2H1.

28. Dispositif selon l'une des revendications 1 à 27, **caractérisé par le fait que** la hauteur (H2) du contour d'ouverture de la pince, prise entre les deux bords libres (213, 223) des plaques (210, 220) est ≥ à au moins 3H1.

29. Dispositif selon l'une des revendications 1 à 28, **caractérisé par le fait que** les deux zones de liaison (232, 234) entre la bande de liaison (230) et respectivement chacune des deux plaques (210, 220) sont adaptées pour subir des déformations de sorte que sous contrainte la bande de liaison (230) s'incline progressivement et la pince se déforme à la façon d'un parallélogramme déformable, les deux plaques (210, 220) restant parfaitement parallèles entre elles.

30. Dispositif selon l'une des revendications 1 à 28, **caractérisé par le fait que** la bande de liaison (230) est déformable pour permettre de conserver un parallélisme général entre la plaque principale (210) et la contreplaque (230).

31. Dispositif selon l'une des revendications 1 à 30, **caractérisé par le fait qu'**il est réalisé en une couleur distinctive et formant contraste par rapport aux pièces à fixer, pour servir de témoin de présence.

## Claims

1. Fastening device comprising a clamp (200) and a fastening element (100), the clamp (200) being formed of a main plate (210) and a counterplate (220) connected together by a connecting strip (230), and the fastening element (100) comprising a barrel (110) fixedly attached to the main plate (210) and provided with an internal channel (120), **characterized in that** the counterplate (220) has, at rest, a non-rectilinear shape that is convex, curving towards the barrel (110), while being suitable for accepting a deformation to the flat state under mechanical stress.

2. Device according to Claim 1, **characterized in that** it is formed of a single piece by moulding in plastic.

3. Device according to one of Claims 1 or 2, **characterized in that** it is formed of polyoxymethylene.

4. Device according to one of Claims 1 to 3, **characterized in that** it is made of a material allowing local elastic deformations.

5. Device according to one of Claims 1 to 4, **characterized in that** the internal channel (120) of the barrel (110) opens at least onto the interior of the clamp (200).

6. Device according to one of Claims 1 to 5, **characterized in that** the internal channel (120) of the barrel (110) is suitable for receiving a locking member (500) of the screw type, for example a metal or metal sheet screw or a soft material screw, stud, bolt, quarter-turn locking member, or any equivalent means namely, in a general manner, any locking member comprising a recessed head and a shank suitable for being engaged and held in the barrel.

7. Device according to one of Claims 1 to 6, **characterized in that** the internal channel (120) of the barrel has a smooth surface.

8. Device according to one of Claims 1 to 6, **characterized in that** the internal channel (120) of the barrel is tapped.

9. Device according to one of Claims 1 to 8, **characterized in that** the internal channel (120) of the barrel (110) is in relief, slightly recessed in the direction of the end of the barrel (110).

10. Device according to one of Claims 1 to 9, **characterized in that** the main plate (210) has an orifice (218) aligned on the channel (120) of the barrel.

11. Device according to one of Claims 1 to 10, **characterized in that** the counterplate (220) is formed of a circular dome centred about an axis orthogonal to the axis (112) of the barrel and parallel to the connecting strip (230).

12. Device according to one of Claims 1 to 11, **characterized in that** the counterplate (220) has a through hole (228) designed to receive the locking member.

13. Device according to Claim 12, **characterized in that** the hole (228) has a shape and dimensions suitable for preventing an interaction with the locking member, irrespective of the thickness of the piece placed and clamped in the clamp (200) and hence irrespective of the deformation of the counterplate (220).

14. Device according to one of Claims 12 or 13, **characterized in that** the hole (228) is elongated in a direction perpendicular to the connecting strip (230).

15. Device according to one of Claims 1 to 14, **characterized in that** the two plates (210, 220) have different widths.

16. Device according to one of Claims 1 to 15, **characterized in that** the counterplate (220) has a width greater than the main plate (210).

17. Device according to one of Claims 1 to 16, **characterized in that** the counterplate (220) is connected to the connecting strip (230) by two sections (224, 225) which converge in the direction of the connecting strip (230).

18. Device according to one of Claims 1 to 17, **characterized in that** the connecting strip (230) is inclined at rest, relative to the axis (112) of the barrel (110).

19. Device according to one of Claims 1 to 18, **characterized in that** the connecting strip (230) diverges relative to the axis (112) of the barrel (110) coming closer to the counterplate (220).

20. Device according to one of Claims 1 to 19, **characterized in that** the main plate (210) is furnished on its inner surface with a protruding means (240) capable of holding the piece inserted into the clamp and of centring the device relative to the through hole made in the piece to be fastened.

21. Device according to Claim 20, **characterized in that** the retention means (240) is formed of a nipple centred on the axis (112) of the barrel.

22. Device according to Claim 21, **characterized in that** the nipple (240) is delimited by an end facet (244) truncated via a plane (246) directed towards the opening of the clamp and converging towards the main plate (210), coming closer to the opening contour of the clamp (200).

23. Device according to one of Claims 21 or 22, **characterized in that** the portion of the nipple (240) directed towards the connecting strip (230) serves as a bearing element, after the installation, at the edge of the drillhole formed in the piece to be assembled, in order to prevent a free removal of the device.

24. Device according to one of Claims 1 to 23, **characterized in that** the opening facets (213, 223) of the plates (210, 220) are truncated and define bevels (214, 224) which diverge towards the outside of the clamp.

25. Device according to one of Claims 1 to 24, **characterized in that** the free height (H1) available at rest between the two plates (210, 220) is ≥ 1.5 mm.

26. Device according to one of Claims 1 to 25, **characterized in that** the height (H2) of the opening contour of the clamp, taken between the two free edges (213, 223) of the plates (210, 220) is of the order of magnitude of the height of the connecting strip (230).

27. Device according to one of Claims 1 to 26, **characterized in that** the height (H2) of the opening contour of the clamp, taken between the two free edges (213, 223) of the plates (210, 220) is ≥ 2H1.

28. Device according to one of Claims 1 to 27, **characterized in that** the height (H2) of the opening contour of the clamp, taken between the two free edges (213, 223) of the plates (210, 220) is ≥ 3H1.

29. Device according to one of Claims 1 to 28, **characterized in that** the two connecting zones (232, 234) between the connecting strip (230) and respectively each of the two plates (210, 220) are suitable for withstanding deformations such that, under stress, the connecting strip (230) inclines progressively and the clamp deforms in the manner of a deformable parallelogram, the two plates (210, 220) remaining perfectly parallel with one another.

30. Device according to one of Claims 1 to 28, **characterized in that** the connecting strip (230) can be deformed to make it possible to retain a general parallelism between the main plate (210) and the counterplate (230).

31. Device according to one of Claims 1 to 30, **characterized in that** it is made in a distinctive colour forming a contrast relative to the pieces to be fastened, to serve as an indication of presence.

## Patentansprüche

1. Befestigungsvorrichtung, die eine Klammer (200) und ein Befestigungselement (100) umfaßt, wobei die Klammer (200) aus einer Hauptplatte (210) und einer Gegenplatte (220) gebildet ist, die miteinander durch einen Verbindungsstreifen (230) verbunden sind, und das Befestigungselement (100) einen Schaft (110) umfaßt, der fest mit der Hauptplatte (210) verbunden und mit einem inneren Kanal (120) versehen ist, **dadurch gekennzeichnet, daß** die Gegenplatte (220) in Ruhe eine nicht geradlinige, gekrümmte Form aufweist, die zum Schaft (110) hin konvex ist, während sie dazu eingerichtet ist, unter mechanischer Spannung eine Verformung zum geraden Zustand hinzunehmen.

2. Vorrichtung nach Anspruch 1, **dadurch gekennzeichnet, daß** sie aus einem einzigen Stück aus Kunststoff durch Abformen gebildet ist.

3. Vorrichtung nach einem der Ansprüche 1 oder 2, **dadurch gekennzeichnet, daß** sie aus Polyoxymethylen gebildet ist.

4. Vorrichtung nach einem der Ansprüche 1 bis 3, **dadurch gekennzeichnet, daß** sie aus einem Material hergestellt ist, das örtliche elastische Verformungen gestattet.

5. Vorrichtung nach einem der Ansprüche 1 bis 4, **dadurch gekennzeichnet, daß** der innere Kanal (120) des Schaftes (110) mindestens in das Innere der Klammer (200) einmündet.

6. Vorrichtung nach einem der Ansprüche 1 bis 5, **dadurch gekennzeichnet, daß** der innere Kanal (120) des Schaftes (110) dazu eingerichtet ist, ein Blockierorgan (500) nach Art einer Schraube aufzunehmen, zum Beispiel eine Metallschraube oder Blechschraube oder eine Schraube aus weichem Material, einen Schraubbolzen, eine Mutterschraube, ein Organ, das nach einer Viertelumdrehung blockiert, oder jedes äquivalente Mittel, und zwar allgemein jedes Sperrorgan, das einen verbreiterten Kopf und eine Stange umfaßt, die geeignet ist, im Schaft in Eingriff zu gelangen und gehalten zu werden.

7. Vorrichtung nach einem der Ansprüche 1 bis 6, **dadurch gekennzeichnet, daß** der innere Kanal (120) des Schaftes eine glatte Oberfläche besitzt.

8. Vorrichtung nach einem der Ansprüche 1 bis 6, **dadurch gekennzeichnet, daß** der innere Kanal (120) des Schaftes mit einem Gewinde versehen ist.

9. Vorrichtung nach einem der Ansprüche 1 bis 8, **dadurch gekennzeichnet, daß** der innere Kanal (120) des Schaftes (110) abgeschrägt in Richtung des Endes des Schaftes (110) leicht erweitert ist.

10. Vorrichtung nach einem der Ansprüche 1 bis 9, **dadurch gekennzeichnet, daß** die Hauptplatte (210) eine Öffnung (218) besitzt, die auf den Kanal (120) des Schaftes ausgerichtet ist.

11. Vorrichtung nach einem der Ansprüche 1 bis 10, **dadurch gekennzeichnet, daß** die Gegenplatte (220) als kreisförmige Kappe ausgebildet ist, die um eine Achse senkrecht zur Achse (112) des Schaftes und parallel zum Verbindungsstreifen (230) zentriert ist.

12. Vorrichtung nach einem der Ansprüche 1 bis 11, **dadurch gekennzeichnet, daß** die Gegenplatte (220) einen querverlaufenden Durchbruch (228) besitzt, der dazu bestimmt ist, das Blockierorgan aufzunehmen.

13. Vorrichtung nach Anspruch 12, **dadurch gekennzeichnet, daß** der Durchbruch (228) eine Form und Abmessungen hat, die dazu eingerichtet sind, eine Wechselwirkung mit dem Blockierorgan zu vermeiden, wie auch die Dicke des Stückes sein mag, das in der Klammer (200) eingesetzt und eingeklemmt wird, und demnach, wie auch die Verformung der Gegenplatte (220) sein mag.

14. Vorrichtung nach einem der Ansprüche 12 oder 13, **dadurch gekennzeichnet, daß** der Durchbruch (228) in einer Richtung senkrecht zum Verbindungsstreifen (230) länglich ist.

15. Vorrichtung nach einem der Ansprüche 1 bis 14, **dadurch gekennzeichnet, daß** die beiden Platten (210, 220) unterschiedliche Breiten haben.

16. Vorrichtung nach einem der Ansprüche 1 bis 15, **dadurch gekennzeichnet, daß** Gegenplatte (220) eine größere Breite als die Hauptplatte (210) hat.

17. Vorrichtung nach einem der Ansprüche 1 bis 16, **dadurch gekennzeichnet, daß** die Gegenplatte (220) am Verbindungsstreifen (230) mit zwei Teilabschnitten (224, 225) verbunden ist, die in Richtung des Verbindungsstreifens (230) konvergieren.

18. Vorrichtung nach einem der Ansprüche 1 bis 17, **dadurch gekennzeichnet, daß** der Verbindungsstreifen (230) in Ruhe bezüglich der Achse (112) des Schaftes (110) geneigt ist.

19. Vorrichtung nach einem der Ansprüche 1 bis 18, **dadurch gekennzeichnet, daß** der Verbindungsstreifen (230) in Annäherung an die Gegenplatte (220)bezüglich der Achse (112) des Schaftes (110) divergiert.

20. Vorrichtung nach einem der Ansprüche 1 bis 19, **dadurch gekennzeichnet, daß** die Hauptplatte (210) auf ihrer Innenoberfläche mit einem überstehenden Mittel (240) ausgestattet ist, das geeignet ist, das in die Klammer eingeführte Stück zu halten und die Vorrichtung in Bezug auf das Durchgangsloch zu zentrieren, das in das zu befestigende Stück eingebracht ist.

21. Vorrichtung nach Anspruch 20, **dadurch gekennzeichnet, daß** die Haltemittel (240) von einem Ansatz gebildet sind, der auf die Achse (112) des Schaftes zentriert ist.

22. Vorrichtung nach Anspruch 21, **dadurch gekennzeichnet, daß** der Ansatz (240) durch eine Endfacette (244) begrenzt ist, die durch eine Ebene (246) verkürzt ist, die zur Öffnung der Klammer hin gerichtet ist und die in Annäherung an die Kontur der Öffnung der Klammer (200) zur Hauptplatte (210) hin konvergiert.

23. Vorrichtung nach einem der Ansprüche 21 oder 22, **dadurch gekennzeichnet, daß** der Teil des Ansatzes (240), der zum Verbindungsstreifen (230) hin gerichtet ist, nach dem Einsetzen als Anlage am Rand der Bohrung dient, die in dem zu montierenden Stück ausgebildet ist, um ein freies Entfernen der Vorrichtung zu untersagen.

24. Vorrichtung nach einem der Ansprüche 1 bis 23, **dadurch gekennzeichnet, daß** die Öffnungsfacetten (213, 223) der Platten (210, 220) stumpf sind und Abschrägungen (214, 224) definieren, die zur Außenseite der Klammer hin divergieren.

25. Vorrichtung nach einem der Ansprüche 1 bis 24, **dadurch gekennzeichnet, daß** die freie Höhe (H1), die in Ruhe zwischen den beiden Platten (210, 220) zur Verfügung steht, ≥ 1,5 mm beträgt.

26. Vorrichtung nach einem der Ansprüche 1 bis 25, **dadurch gekennzeichnet, daß** die Höhe (H2) der Öffnungskontur der Klammer, gemessen zwischen den beiden freien Rändern (213, 223) der Platten (210, 220), in der Größenordnung der Höhe des Verbindungsstreifens (230) liegt.

27. Vorrichtung nach einem der Ansprüche 1 bis 26, **dadurch gekennzeichnet, daß** die Höhe (H2) der Öffnungskontur der Klammer, gemessen zwischen den beiden freien Rändern (213, 223) der Platten (210, 220), mindestens ≥ 2H1 beträgt.

28. Vorrichtung nach einem der Ansprüche 1 bis 27, **dadurch gekennzeichnet, daß** die Höhe (H2) der Öffnungskontur der Klammer, gemessen zwischen den beiden freien Rändern (213, 223) der Platten (210, 220), mindestens ≥ 3H1 beträgt.

29. Vorrichtung nach einem der Ansprüche 1 bis 28, **dadurch gekennzeichnet, daß** die beiden Verbindungszonen (232, 234) zwischen dem Verbindungsstreifen (230) und jeweils einer der beiden Platten (210, 220) dazu eingerichtet sind, Verformungen zu erfahren, und zwar derart, daß sich der Verbindungsstreifen (230) unter Spannung progressiv neigt und die Klammer sich nach Art eines verformbaren Parallelogramms verformt, wobei die beiden Platten (210, 220) untereinander vollkommen parallel verbleiben.

30. Vorrichtung nach einem der Ansprüche 1 bis 28, **dadurch gekennzeichnet, daß** der Verbindungsstreifen (230) verformbar ist, um es zu gestatten, eine allgemeine Parallelität zwischen der Hauptplatte (210) und der Gegenplatte (230) aufrechtzuerhalten.

31. Vorrichtung nach einem der Ansprüche 1 bis 30, **dadurch gekennzeichnet, daß** sie als Zeichen ihres Vorhandensein in einer Kennfarbe ausgeführt ist und bezüglich der zu befestigenden Stücke einen Kontrast bildet.
